# FASCICULE DE BREVET EUROPEEN

(11) **EP 2 076 425 B1**
(45) Date de publication et mention de la délivrance du brevet: **15.09.2010**
(21) Numéro de dépôt: 07866407.5
(22) Date de dépôt: 19.10.2007
(51) Int. Cl.: B63B 21/50, B63B 22/00, B63B 22/04

(54) **RESEAU DE FLOTTEURS, NOTAMMENT DESTINE POUR L'ANCRAGE D'EOLIENNES ET/OU D'HYDROLIENNES SUR DES SITES MARINS DE PROFFONDEUR IMPORTANTE**
NETZ VON SCHWIMMERN, INSBESONDERE ZUR VERANKERUNG VON WINDTURBINEN UND/ODER UNTERWASSERGENERATOREN AN TIEFEN STELLEN IM MEER
NETWORK OF FLOATERS, ESPECIALLY FOR ANCHORING WIND TURBINES AND/OR UNDERWATER GENERATORS ON DEEP MARINE SITES

(30) Priorité: 20.10.2006 FR 0609204
(43) Date de publication de la demande: 08.07.2009
(73) Titulaire: Nenuphar, 59000 Lille (FR)
(72) Inventeur: SILVERT, Frédéric c/o Nenuphar, ABM Centre, 59000 Lille (FR); SMADJA, Charles c/o Nenuphar, ABM Centre, 59000 Lille (FR)
(74) Mandataire: Duthoit, Michel Georges André
(86) Numéro de dépôt international: PCT/FR2007/001730
(87) Numéro de publication internationale: WO 2008/047011

(56) Documents cités:
- EP-A- 1 666 722
- EP-B1- 1 348 867
- WO-A-02/10589
- WO-A-2005/108199
- DE-A1-102004 024 257
- US-A- 5 979 353

## Description

L'invention concerne un réseau de flotteurs, notamment destiné pour l'ancrage d'éoliennes et/ou d'hydroliennes sur des sites marins de profondeur importante.

Le réseau peut être également destiné pour l'ancrage de systèmes à colonne d'eau oscillante convertissant l'énergie de la houle en électricité.

Nous décrivons par la suite la problématique de l'ancrage d'une éolienne marine, les techniques utilisées et leurs limites. Il est à noter que l'ancrage d'une hydrolienne ou d'un système à colonne d'eau oscillante reprendrait, pour grande partie, cette même problématique.

Le type d'ancrage utilisé représente une part significative de l'investissement total d'une éolienne marine et par ailleurs assure sa fiabilité. Actuellement, les éoliennes en activité sont installées sur des profondeurs d'eau peu importantes, de l'ordre de quelques dizaines de mètres.

Les plus usuelles sont les éoliennes à axe de rotation horizontal, dont le rotor horizontal est porté à l'extrémité supérieure d'un mât. L'extrémité inférieure du mât est assujettie au fond marin de manière rigide, suivant la technique la plus adaptée aux caractéristiques du sol :
- dans un sol souple, par exemple, l'extrémité inférieure du mât peut être plantée, tel un pieu, par battage,
- dans un sol dur, l'extrémité inférieure du mât peut être pourvue d'une masse gravitaire reposant sur le fond marin,
- enfin pour des profondeurs moyennes de l'ordre de 50 m une structure « jacket » constituée de tubes soudés peut être employée afin d'obtenir une assise plus large sur le fond marin.

Toutes ces techniques sont économiquement viables pour des profondeurs d'eau peu importantes, mais deviennent trop coûteuses pour de grandes profondeurs d'eau, notamment pour des hauteurs d'eau supérieures à 50 m.

La mer du Nord bénéficie de fonds de faible pente et permet de disposer de vastes sites éoliens à faible fond, propices à l'installation de ce type d'éolienne à ancrage rigide. En revanche, pour la plupart des autres mers et océans, les pentes sont généralement bien supérieures, limitant sensiblement la mise en place de ce type d'éolienne sur une bande côtière relativement étroite. En méditerranée, par exemple, cette bande correspond également à une zone de fort trafic maritime.

Afin de réduire les coûts d'ancrage pour des profondeurs d'eau plus importantes, c'est-à-dire supérieures à 50 m, la littérature actuelle préconise l'utilisation d'éoliennes flottantes. Ces éoliennes, encore au stade de l'étude, comportent au moins un flotteur et sont généralement assujetties au fond marin par une ou plusieurs lignes d'ancrage. Elles peuvent être stabilisées, le cas échéant par des lests immergés.

Contrairement aux éoliennes à ancrage rigide, elles peuvent se déplacer par rapport au fond marin, et sont sensibles, notamment, aux actions du vent, de la houle, des courants, aux forces de rappel des lignes d'ancrage, à la poussée d'Archimède sur les flotteurs, aux forces de la pesanteur ...

On connaît, par exemple, du document FR-2.837.535, une installation comprenant une éolienne, dont le support est constitué par une plate-forme à ligne tendue. La plate-forme est ballastable/déballastable et dimensionnée pour obtenir un excès de flottaison afin de permettre la mise en tension des lignes d'ancrage assujetties au fond par des corps morts.

Cette solution présente toutefois les inconvénients suivants :
- elle nécessite un grand nombre d'ancrages par éolienne,
- elle nécessite des corps morts de masse importante afin de pouvoir s'opposer aux forces de rappel des lignes d'ancrage,
- elle nécessite un caisson immergé de grande taille,
- dans le cas d'une grande vague, telle qu'elle peut être rencontrée à distance des côtes, l'éolienne ne peut s'élever, risquant ainsi de détériorer le rotor.

WO 02/10 589 A divulgue un système selon les caractéristiques du préambule de la revendication 1.

Le but de la présente invention est de pallier aux inconvénients précités en proposant un réseau de flotteurs comprenant au moins un noeud utile et permettant d'ancrer à moindre coût et de manière stable au moins un dispositif tel que notamment une éolienne et/ou une hydrolienne et/ou un système à colonne d'eau oscillante sur des fonds de profondeur importante.

Un autre but de l'invention est de proposer un réseau de flotteurs permettant d'ancrer une pluralité de dispositifs tels que, par exemple, des éoliennes et/ou des hydroliennes et/ou des systèmes à colonne d'eau oscillante au fond marin, tout en limitant le nombre de lignes d'ancrage à utiliser.

Un autre but de l'invention est de proposer un réseau de flotteurs déformable localement en fonction des conditions de houle permettant notamment de résister à de grandes vagues.

D'autres buts et avantages de l'invention apparaîtront au cours de la description qui va suivre, qui n'est donnée qu'à titre indicatif et qui n'a pas pour but de la limiter.

L'invention concerne un réseau de flotteurs, par exemple destiné pour l'ancrage d'au moins une éolienne et/ou d'une hydrolienne et/ou un système à colonne d'eau oscillante sur des sites marins de profondeur importante, caractérisé en ce que le réseau est de type linéaire ou de type surfacique et est constitué par un ensemble de flotteurs, chaque flotteur constituant un noeud du réseau, lesdits flotteurs étant amarrés entre eux par des liaisons souples, chaque liaison étant munie d'au moins un lest immergé, lesdites liaisons permettant de maintenir les noeuds du réseau en des positions définies, espacées par des écartements de valeurs identiques ou non, le réseau présentant au moins deux noeuds périphériques fixés au fond marin par des ancrages, et au moins un ou plusieurs noeuds internes, dont l'un au moins est un noeud utile, lesdites liaisons souples permettant, en outre, d'interdire la rotation sur lui même du flotteur correspondant audit au moins un noeud utile.

L'invention sera mieux comprise à la lecture de la description suivante, accompagnée des dessins en annexe qui en font partie intégrante et parmi lesquels :
- la figure 1 est une vue de dessus d'un réseau de flotteurs surfaciques conforme à l'invention selon un premier mode de réalisation,
- la figure 2 est une vue de côté d'un réseau de flotteurs linéaires conforme à l'invention selon un second mode de réalisation,
- la figure 3 est une vue de dessus d'un réseau surfacique conforme à l'invention selon un troisième mode de réalisation,
- la figure 4 est une vue de dessus d'un réseau surfacique conforme à l'invention selon un quatrième mode de réalisation,

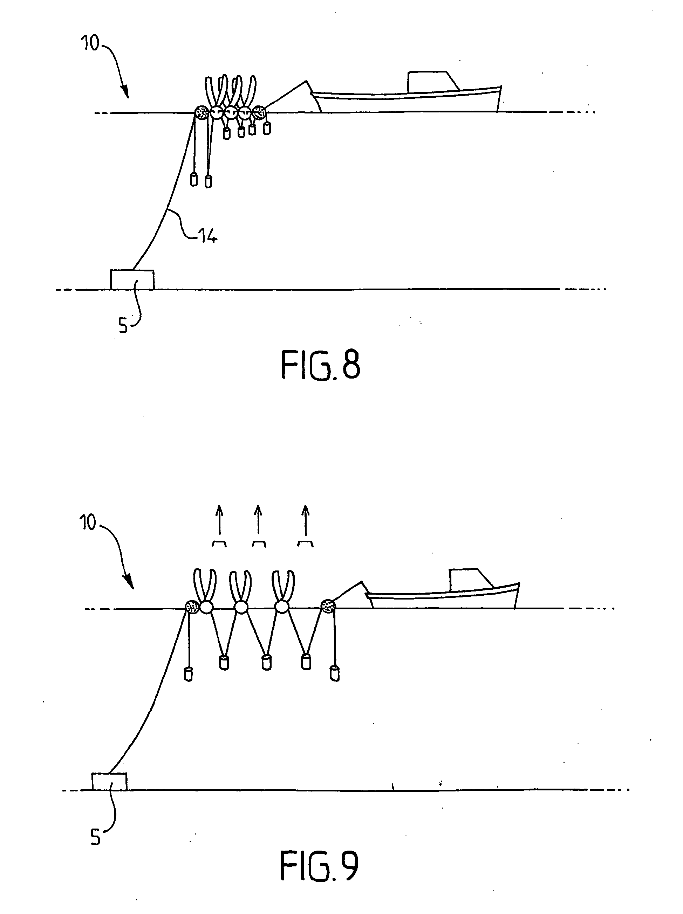

- les figures 5 à 9 représentent différentes étapes d'un procédé d'installation d'un réseau d'installation d'un réseau flottant conforme à l'invention.

L'invention concerne un réseau de flotteurs 1, par exemple destiné pour l'ancrage d'au moins une éolienne, d'une hydrolienne, ou encore d'un système à colonne d'eau oscillante sur des sites marins de profondeur importante.

Le réseau peut être de type linéaire ou encore de type surfacique. Il est constitué par un ensemble de flotteurs 2. Chaque flotteur 2 constitue un noeud 4₁,4₂ du réseau 1, lesdits flotteurs étant amarrés entre eux par des liaisons souples 3.

Chaque liaison est munie d'au moins un lest immergé 7, permettant de maintenir les noeuds 4₁, 4₂ du réseau en des positions définies, espacées par des écartements (e) de valeurs identiques ou non.

Le réseau présente au moins deux noeuds périphériques 4₁ fixés au fond marin par des ancrages 5, et au moins un noeud interne 4₂.

L'un au moins des noeuds internes 4₂ est un noeud utile, lesdites liaisons souples 3 permettant, en outre, d'interdire la rotation sur lui même du flotteur correspondant audit au moins un noeud utile.

On entend par noeud utile un flotteur permettant de supporter un dispositif, notamment une éolienne ou une hydrolienne ou encore un système à colonne d'eau oscillante en une position définie.

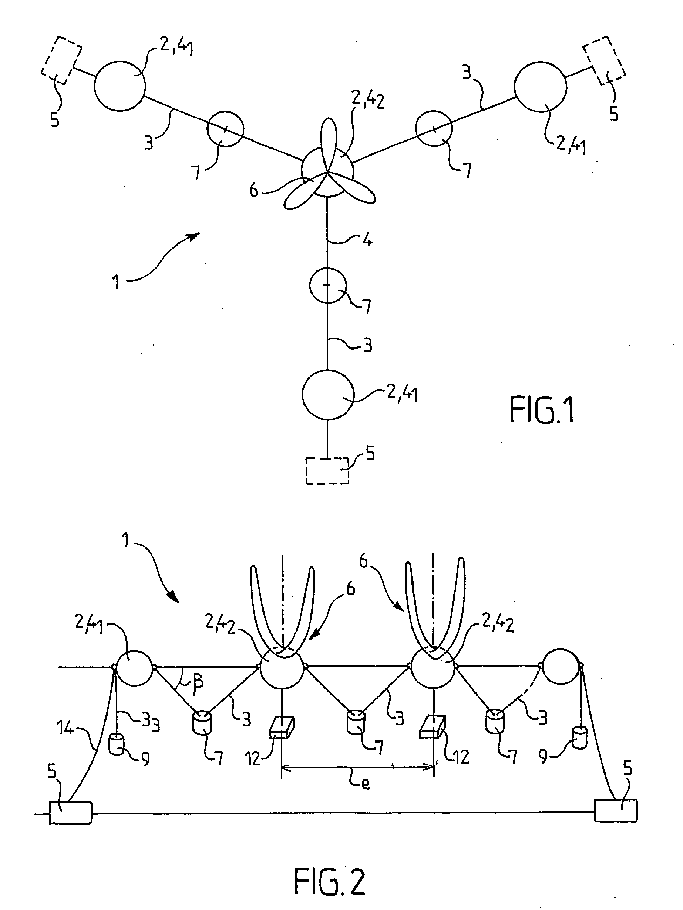

La figure 1 illustre un réseau de flotteurs surfaciques de configuration minimale. Cet exemple de réalisation présente quatre flotteurs dont l'un est un noeud interne 4₂ et les trois autres des noeuds périphériques 4₁, notamment répartis tous les 120 ° autour dudit noeud interne.

Les noeuds périphériques 4₁ sont amarrés auxdits noeuds internes 4₂ par l'intermédiaire de liaisons souples 3, constituées notamment par des câblages et munies de lests immergés 7, notamment, mais pas nécessairement, médians. Chaque noeud périphérique est fixé au fond marin par des ancrages 5, notamment constitués par des corps morts, par exemple de béton, et reposant sur le fond marin, ou par des pieux enfoncés ou vissés dans les fonds marins, permettant ce genre de fixation.

Selon un autre mode de réalisation illustré à la figure 2, le réseau est de type linéaire. L'exemple illustré présente quatre flotteurs dont deux sont des noeuds internes 4₂ et les deux autres des noeuds périphériques 4₁. Dans le cas d'un réseau linéaire, on entend par noeud périphérique 4₁ les noeuds extrêmes du réseau.

Les quatre flotteurs du réseau sont successivement amarrés entre eux par des liaisons souples 3, notamment des câbles, munis de lests 7 immergés, notamment médians. Les noeuds périphériques 4₁ du réseau sont assujettis au fond marin par des ancrages 5, notamment à des corps morts reposant sur le fond marin.

Avantageusement les noeuds successifs 4₁, 4₂ du réseau 1 peuvent être reliés entre eux par les liaisons souples 3, chacune des liaisons 3 étant de dimension supérieure à l'écartement nominal de deux noeuds successifs concernés du réseau de flotteurs afin d'autoriser un déplacement relatif limité d'un noeud par rapport à un noeud voisin, selon une direction verticale et/ou horizontale, et permettre ainsi une déformation contrôlée et stable du réseau de flotteur dans des conditions de houle.

La stabilisation verticale du flotteur 2 correspondant au moins audit noeud utile est assurée, en tout ou partie par les forces de rappel desdites liaisons souples munies de lest 7. Telle qu'illustrée à la figure 1 par exemple, la stabilisation du noeud interne 4₂ peut être réalisée par les forces de rappel des trois liaisons souples 3 réparties à 120° autour du flotteur.

Selon le mode de réalisation du réseau linéaire illustré à la figure 2, la stabilisation verticale d'un noeud utile, peut être complétée par un lest 12. Le lest 12 peut être immergé, suspendu sous le flotteur concerné. Ce lest 12 peut être notamment suspendu par une liaison souple sous le flotteur concerné, ou encore assujetti de manière rigide, telle une quille. Selon un autre exemple non illustré, le lest peut être intégré dans la structure même du flotteur, dans le fond.

Bien qu'illustré uniquement dans le cadre d'un réseau linéaire, il est à noter que ce lest suspendu 12, notamment ou encore intégré au flotteur peut être également employé pour un réseau surfacique afin d'augmenter la stabilisation verticale des noeuds utiles.

Nous décrivons maintenant un exemple de réalisation d'un ancrage d'un noeud périphérique 4₁. Tel qu'illustré à la figure 2, chaque noeud périphérique 4₁ du réseau 1 peut être, d'une part, ancré au fond par une ligne d'ancrage 14 de longueur supérieure à la profondeur maximale du point d'ancrage et, d'autre part relié par l'une des liaisons souples 3 à au moins un noeud interne 4₂ du réseau. Avantageusement, les noeuds périphériques 4₁ peuvent être constitués par de simples bouées.

Ces dispositions permettront avantageusement au réseau de résister à de grandes vagues, du type raz de marée Lors d'un tel phénomène, le noeud périphérique peut ainsi s'élever, voire même être temporairement immergé sous une grande vague, permettant à un noeud interne voisin un plus large débattement en hauteur afin d'accompagner la vague et maintenir un dispositif, notamment une éolienne hors de l'eau.

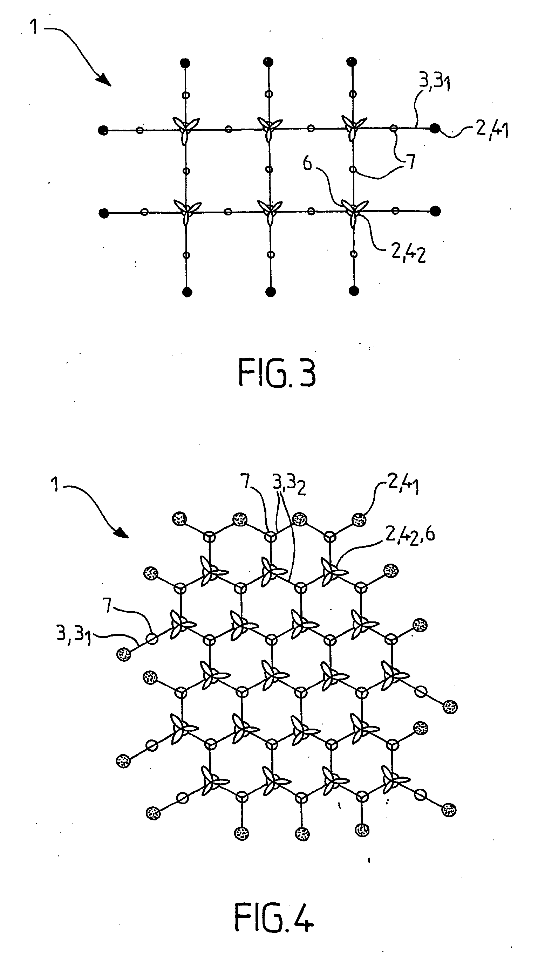

Tel qu'illustré à la figure 2 avec le réseau linéaire ou encore à la figure 3 avec l'exemple de réseau surfacique illustré, chaque lest immergé 7 est amarré uniquement à deux noeuds 4₁, 4₂ ; 4₂ , 4₂ du réseau 1 par les liaisons souples 3.

Les liaisons souples 3₁ peuvent être alors constituées par de simples câbles longilignes fixés à chacune de leurs extrémités à un noeud, notamment à un flotteur.

Selon un autre mode de réalisation, en particulier pour un réseau de type surfacique, au moins l'un des lests immergés 7 peut être amarré à au moins trois noeuds 4₁, 4₂, du réseau, la liaison souple 3₁ concernée présentant un schéma en étoile dont la géométrie dépend des positionnements des noeuds.

Par exemple, tels qu'illustrés à la figure 4 des lests 7 sont amarrés à trois noeuds 4₁, 4₂ du réseau, la liaison souple présentant un schéma en étoile à trois branches, notamment réparties à 120

Dans cet exemple illustré, les noeuds du réseau sont situés au sommet d'une structure hexagonale. Selon un autre exemple non illustré, un lest immergé 7 peut être amarré à quatre noeuds du réseau, voire plus. La liaison souple présenterait alors un schéma en étoile à quatre branches.

Selon un mode avantageux de réalisation, tel qu'illustré à la figure 2, chaque brin d'une liaison souple joignant un noeud 4₁, 4₂ audit lest immergé 7 peut former avec le plan d'eau un angle β non nul, notamment mais non nécessairement inférieur ou égal à 45 °. Il a notamment été testé en bassin que cette configuration augmentait la stabilisation verticale des flotteurs. Toutefois, l'invention n'est pas limitée à cette plage de valeur angulaire.

Les flotteurs 2 peuvent être de forme sphérique, semi-sphérique, ovoïde, elliptique ou torique, ou toute combinaison de ces formes de base, la forme du flotteur étant avantageusement choisie de sorte que le mouvement du centre de poussée induit par l'inclinaison du flotteur par rapport au plan d'eau ne déstabilise pas le flotteur, voire même assure la stabilité verticale du flotteur en favorisant le retour de ce dernier dans sa position d'équilibre.

Avantageusement, le réseau trouvera une application particulière pour l'ancrage d'une éolienne ou encore d'une hydrolienne ou encore d'un système à colonne d'eau oscillante. Ledit au moins un noeud utile du réseau peut donc supporter une éolienne à axe vertical, à axe horizontal, ou une hydrolienne, ou encore la partie flottante d'un système à colonne d'eau oscillante.

Il est à noter que les flotteurs peuvent être en tout ou partie immergés, les tests en bassin ayant démontré que les flotteurs gagnent en stabilité lorsqu'ils sont immergés à plus de 50 %.

L'ancrage d'éoliennes à l'aide d'un réseau flottant conforme à l'invention peut être installé suivant le procédé d'installation ci-après décrit, à partir d'un quai d'une zone portuaire 8, de faible fond, jusqu'à un site 10 de mise en oeuvre.

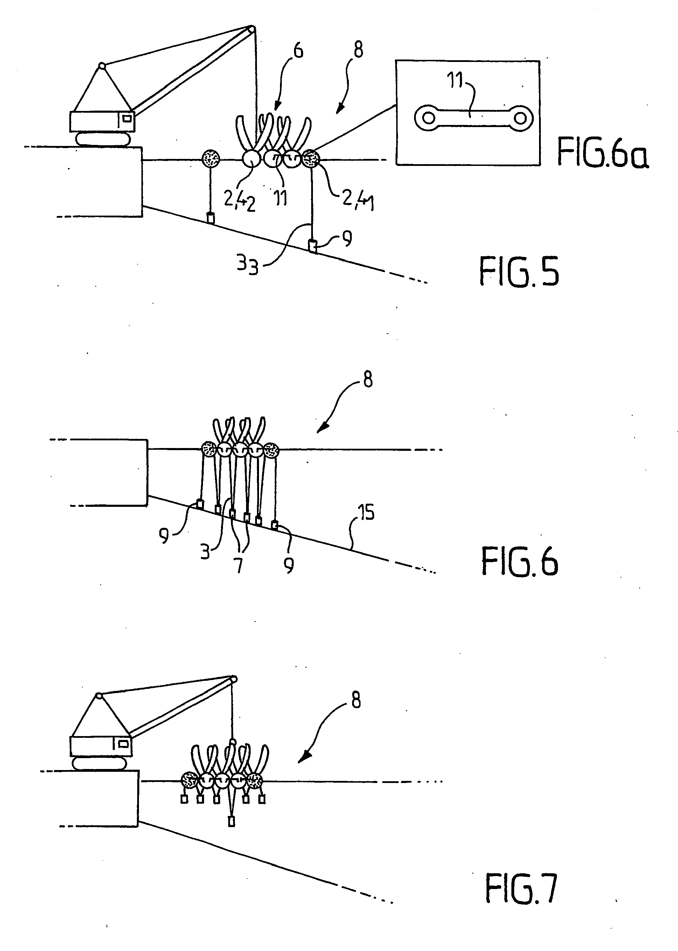

Le procédé peut présenter les étapes suivantes :
- on dépose au moins deux flotteurs 2 correspondant à deux noeuds périphériques 4₁ du réseau sur la surface d'eau de la zone portuaire 8, les flotteurs 2 étant assujettis par une liaison 3₃ à un lest 9 posé sur le fond marin 15,
- on dépose successivement les flotteurs 2 correspondant aux noeuds internes 4₂ du réseau et dont au moins un est une éolienne 6 et on assemble successivement les flotteurs 2 entre eux, par l'intermédiaire de liaisons rigides, telles que des bielles ou encore des câbles de longueur adaptée, afin de constituer une embarcation de flotteurs, stable permettant de maintenir le rotor de ladite au moins une éolienne 6 hors de l'eau, telle qu'illustrée à la figure 6,
- on relève jusqu'au décollement du fond les lests 7, 9 en tirant les extrémités des liaisons 3, 3₃,
- on remorque l'embarcation de flotteurs à partir de la zone portuaire 8 jusqu'au site 10 de mise en place du réseau 1,
- on fixe l'embarcation de flotteurs à un ancrage 5 préalablement installé, par l'intermédiaire d'un flotteur 2 correspondant à un noeud périphérique 4₁ du réseau,
- on ajuste la longueur des liaisons 3 des lests 7 notamment en descendant les lests,
- on retire successivement les liaisons rigides 11, notamment les bielles et on écarte au fur et à mesure les flotteurs,
- on déploie le réseau de flotteurs et on assujettit les noeuds périphériques 4₁ restés libres au fond marin par l'intermédiaire d'ancrages 5.

Naturellement, d'autres modes de mise en oeuvre, à la portée de l'homme de l'art, auraient pu être envisagés sans pour autant sortir du cadre de l'invention définie par les revendications ci-après.

## Revendications

1. Réseau de flotteurs (1), par exemple destiné pour l'ancrage d'au moins une éolienne, ou une hydrolienne, ou encore un système à colonne d'eau oscillante sur des sites marins de profondeur importante, **caractérisé en ce que** le réseau est de type linéaire ou de type surfacique et est constitué par un ensemble de flotteurs (2), chaque flotteur (2) constituant un noeud (4₁, 4₂) du réseau (1), lesdits flotteurs étant amarrés entre eux par des liaisons souples (3), chaque liaison étant munie d'au moins un lest immergé (7), lesdites liaisons permettant de maintenir les noeuds du réseau en des positions définies, espacées par des écartements (e) de valeurs identiques ou non, le réseau présentant au moins deux noeuds périphériques (4₁) fixés au fond marin par des ancrages (5) et au moins un noeud interne (4₂) dont l'un au moins est un noeud utile, lesdites liaisons souples (3) permettant, en outre, d'interdire la rotation sur lui même du flotteur correspondant audit au moins un noeud utile.

2. Réseau de flotteurs (1) selon la revendication 1, dans lequel les noeuds successifs (4₁,4₂ ; 4₂,4₂) du réseau (1) sont reliés entre eux par les liaisons souples (3), chacune des liaisons étant de dimension supérieure à l'écartement nominal de deux noeuds successifs concernés afin d'autoriser un déplacement relatif limité d'un noeud par rapport à un noeud voisin, selon une direction verticale et/ou horizontale et de permettre ainsi une déformation contrôlée et stable du réseau de flotteurs dans des conditions de houle.

3. Réseau de flotteurs selon la revendication 1 ou 2, dans lequel la stabilisation verticale du flotteur correspondant audit au moins un noeud utile est assurée, au moins en partie, par les forces de rappel desdites liaisons souples (3) munies de lests, et peut être complétée, en outre, par au un moins un lest (12) suspendu sous le flotteur concerné, ou encore par un lest intégré dans le fond de la structure même du flotteur concerné.

4. Réseau de flotteurs selon l'une des revendications 1 à 3, dans lequel chaque noeud périphérique (4₁) du réseau est, d'une part, ancré au fond par une ligne d'ancrage (14) de longueur supérieure à la profondeur maximale du point d'ancrage et, d'autre part, relié par l'une des liaisons souples (3) à au moins un noeud interne (4₂) du réseau.

5. Réseau de flotteurs selon l'une des revendications 1 à 4, de type surfacique dont au moins l'un des lests immergés (7) est amarré à au moins trois noeuds (4₁, 4₂) du réseau, la liaison souple concernée présentant un schéma en étoile dont la géométrie dépend des positionnements des noeuds.

6. Réseau de flotteurs selon l'une des revendications 1 à 5, dans lequel chaque brin d'une liaison souple (3) joignant un noeud (4₁, 4₂) audit lest immergé (7) forme avec le plan d'eau un angle β non nul.

7. Réseau de flotteurs selon l'une des revendications 1 à 6, dans lequel lesdits flotteurs (2) sont de forme sphérique ou au moins semi-sphérique, ou de forme ovoïde, ellipsoïde ou torique, ou toute combinaison de ces formes de base, la forme du flotteur étant avantageusement choisie de sorte que le mouvement du centre de poussée induit par l'inclinaison du flotteur par rapport au plan d'eau ne déstabilise pas le flotteur, voire assure la stabilité verticale du flotteur en favorisant le retour de ce dernier dans sa position d'équilibre.

8. Réseau de flotteurs selon l'une des revendications 1 à 7, dans lequel les noeuds périphériques (4₁) sont de simples bouées.

9. Réseau de flotteurs selon l'une des revendications 1 à 8 dans lequel ledit au moins un noeud utile du réseau est une éolienne à axe vertical, à axe horizontal ou une hydrolienne, ou encore la partie flottante d'un système à colonne d'eau oscillante.

10. Réseau de flotteurs selon l'une des revendications 1 à 9, présentant une pluralité de noeuds utiles constitués par des éoliennes et/ou des hydroliennes, et/ou des systèmes à colonnes d'eau oscillante.

## Claims

1. A float array (1), for example intended for anchoring at least one wind turbine, or a tidal turbine, or still an oscillating water column system on very deep marine sites, **characterised in that** the array is of linear type or of surface type and is formed of a set of floats (2), wherein each float (2) forms a knot (41, 42) in the array (1) wherein said floats are moored to one another via flexible linkages (3), each linkage being fitted with at least one immersed weight (7), said linkages enabling to hold the knots of the array in set positions spaced apart by spacers (e) with identical values or not, the array exhibiting at least two peripheral knots (41) fastened to the sea bed by anchors (5) and at least one internal knot (42) whereof at least one is a useful knot, said flexible linkages (3) enabling moreover to prevent the float corresponding to at least one useful knot from rotating around itself.

2. A float array (1) according to claim 1, wherein the successive knots (41.42 ; 42.42) of the array (1) are connected to one another by flexible linkages (3), each of the linkages being greater than the rated spacing of two successive knots for enabling maximum relative displacement of a knot relative to a neighbouring knot, along a vertical and/or horizontal direction and thus to allow for controlled and stable deformation of the float array under tide conditions.

3. A float array according to claim 1 or 2, wherein the vertical stabilisation of the float corresponding to said at least one useful knot is ensured, at least in part, by the recall forces of said flexible linkages (3) fitted with weights, and may be completed, in addition, by at least one weight (12) suspended beneath the affected float, or still by a weight embedded in the bottom of the very structure of the affected float.

4. A float array according to any of the claims 1 to 3, wherein each peripheral knot (41) of the array is, on the one hand, anchored to the bottom by an anchor line (14) with greater length than the maximum depth of the anchor point and, on the other hand, connected by one of the flexible linkages (3) to at least one internal knot (4₂) of the array.

5. A float array according to any of the claims 1 to 4, of surface type whereof at least one of the immersed weights (7) is moored to at least three knots (41, 42) of the array, the star-patterned flexible linkage affected whose geometry depends on the positions of the knots.

6. A float array according to any of the claims 1 to 5, wherein each strand of a flexible linkage (3) joining a knot (41, 42) to said immersed weight (7) forms with the water table a non-zero p angle.

7. A float array according to any of the claims 1 to 6, wherein said floats (2) are spherical or at least semi-spherical in shape, or ovoid, ellipsoid or toric in shape, or any combination of these basic shapes, wherein the shape of the float is advantageously chosen so that the movement of the centre of thrust induced by the tilting float relative to the water table does destabilise the float, possibly ensures the vertical stability of the float while the latter may return to its position of equilibrium more easily.

8. A float array according to any of the claims 1 to 7, wherein the peripheral knots (41) are simple buoys.

9. A float array according to any of the claims 1 to 8, wherein said at least one useful knot of the array is a vertical axis or horizontal axis wind turbine or a tidal turbine, or still the buoyant section of an oscillating water column system.

10. A float array according to any of the claims 1 to 9, having a plurality of useful knots consisting of wind turbines and/or tidal turbines, and/or oscillating water column systems.

## Patentansprüche

1. Netz von Schwimmern (1), zum Beispiel zur Verankerung von wenigstens einer Windkraftanlage oder einer Wasserkraftanlage oder auch eines Systems mit schwingender Wassersäule an Meeresorten großer Tiefe, **dadurch gekennzeichnet, dass** das Netz des Lineartyps oder des Oberflächentyps ist und aus einem Satz von Schwimmern (2) besteht, wobei jeder Schwimmer (2) einen Knoten (4₁, 4₂) des Netzes (1) bildet, wobei die besagten Schwimmer über flexible Verbindungen (3) an einander festgemacht sind, wobei jede Verbindung mit wenigstens einem eingetauchten Ballast (7) versehen ist, wobei die besagten Verbindungen es ermöglichen, die Knoten des Netzes an bestimmtenm Positionen zu halten, die in Abständen (e) gleichen oder ungleichen Wertes von einander bestandet sind, wobei das Netz wenigstens zwei Umkreisknoten (4₁), die durch Ankereinrichtungen (5) am Meeresboden befestigt sind, und wenigstens einen inneren Knoten (4₂), von denen wenigstens einer ein Nutzknoten ist, umfasst, wobei die besagten flexiblen Verbindungen (3) es außerdem ermöglichen, die Drehung um sichselbst des, dem besagten wenigstens einen Nutzknoten entsprechenden Schwimmers zu verhindern.

2. Netz von Schwimmern (1) nach Anspruch 1, bei dem die aufeinanderfolgenden Knoten (4₁, 4₂; 4₂, 4₂) des Netzes (1) über die flexiblen Verbindungen (3) mit einander verbunden sind, wobei jede der Verbindungen eine Abmessung größer als der Nennabstand von zwei betreffenden aufeinanderfolgenden Knoten hat, um eine begrenzte Relatiwerschiebung eines Knoten bezüglich eines nächsten Knotens in einer vertikalen und/oder horizontalen Richtung zu erlauben und also eine kontrollierte und stabile Verformung des Netzes von Schwimmern bei Seegang zu erlauben.

3. Netz von Schwimmern nach Anspruch 1 oder 2, bei dem die vertikale Stabilisierung des, dem besagten wenigstens einen Nutzknoten entsprechenden Schwimmers wenigstens zum Teil durch die Rückstellkräfte der besagten mit Ballasten versehenen flexiblen Verfbindungen (3) gesichert wird und außerdem mit wenigstens einem unter dem betreffenden Schwimmer hängenden Ballast (12) oder auch mit einem im Boden der Struktur selbst des betreffenden Schwimmers integrierten Ballast ergänzt werden kann.

4. Netz von Schwimmern nach einem der Ansprüche 1 bis 3, bei dem jeder Umkreisknoten (4₁) des Netzes, einerseits, durch ein Verankerungsseil (14), dessen Länge größer ist als die Maximaltiefe des Verankerungspunktes ist, am Boden verankert ist und, andererseits, durch eine der flexiblen Verbindungen (3) mit wenigstens einem inneren Knoten (4₂) des Netzes verbunden ist.

5. Netz von Schwimmern nach einem der Ansprüche 1 bis 4, des Oberflächentyps, von dem wenigstens einer der eingetauchten Ballaste (7) an wenigstens drei Knoten (4₁, 4₂) des Netzes festgemacht ist, wobei die betreffende flexible Verbindung ein sternförmiges Schema aufweist, dessen Geometrie von den Positionierungen der Knoten abhängig ist.

6. Netz von Schwimmern nach einem der Ansprüche 1 bis 5, bei dem jeder Strang einer flexiblen Verbindung (3), der einen Knoten (4₁, 4₂) mit dem besagten eingetauchten Ballast (7) verbindet, mit der Wasserfläche einen Winkel β einschließt, der ungleich Null ist.

7. Netz von Schwimmern nach einem der Ansprüche 1 bis 6, bei dem die besagten Schwimmer (2) kreisförmig oder wenigstens halbkreisförmig, oder eiförmig, elliptisch oder torisch sind, oder jede Kombination dieser Basisformen aufweisen, wobei die Form des Schwimmers vorteilhaft so gewählt wird, dass die Bewegung der durch die Neigung des Schwimmers bezüglich der Wasserfläche induzierten Schubmitte den Schwimmer nicht unstabil macht, sogar die vertikale Stabilheit des Schwimmers sichert, indem der Rückkehr dieses letzteren in seine Gleichgewichtsposition gefördert wird.

8. Netz von Schwimmern nach einem der Ansprüche 1 bis 7, bei dem die Umkreisknoten (4₁) einfache Bojen sind.

9. Netz von Schwimmern nach einem der Ansprüche 1 bis 8, bei dem der besagte wenigstens einen Nutzknoten des Netzes eine Windkraftanlage mit vertikaler Achse, mit horizontaler Achse oder eine Wasserkraftanlage, oder auch der schwimmende Teil eines Systems mit schwingender Wassersäule ist.

10. Netz von Schwimmern nach einem der Ansprüche 1 bis 9, aufweisend eine Mehrheit von Nutzknoten, die aus Windkraftanlagen und/oder Wasserkraftanlagen, und/oder Systemen mit schwingenden Wassersäulen bestehen.
